# EUROPÄISCHE PATENTANMELDUNG

(11) **EP 4 427 890 A1**
(43) Veröffentlichungstag der Anmeldung: **11.09.2024**
(21) Anmeldenummer: 23161238.3
(22) Anmeldetag: 10.03.2023
(51) Int. Cl.: B25J 9/16

(54) **SYSTEM ZUR OPTISCHEN ÜBERWACHUNG EINES ARBEITSRAUMS**

(71) Anmelder: Siemens Aktiengesellschaft, 80333 München (DE)
(72) Erfinder: Walter, Maximilian, 90408 Nürnberg (DE); Kahabka, Thomas, 91224 Pommelsbrunn (DE)
(74) Vertreter: Siemens Patent Attorneys

(57) **Zusammenfassung**

Um ein System (1) zur optischen Überwachung eines Arbeitsraums (AR), wird vorgeschlagen dem Arbeitsraum (AR) einen Zugangsbereich (ZB) vorzulagern, welcher ausgestaltet ist, dass dieser zunächst durchschritten werden muss um zu dem Zugang (T) zu gelangen, wobei der Zugangsbereich (ZB) einen Zugangsbereichsdetektor (la) aufweist, welcher in der funktionsweise dem Arbeitsraumdetektor (2a) ähnlich ist und ebenfalls ausgestaltet ist
- mit einem bildgebenden Sensor zur Aufnahme von digitalen Bilddateien oder von Punktewolken und
- mit einer Test-Auswerteeinheit (1b), welche ausgestaltet ist die Bilddateien oder die Punktewolken so auszuwerten wie es in der Auswerteeinheit (2b) des Arbeitsraumdetektors (2a) vorgesehen ist, und eine Positionsangabe (PZ) einer im Zugangsbereich (ZB) erkannten Person (M) auszugeben.

## Beschreibung

Die Erfindung betrifft ein System zur optischen Überwachung eines Arbeitsraums, welcher über einen Zugang von zumindest einer Person begehbar ist, umfassend einen Arbeitsraumdetektor für den Arbeitsraum, welcher einen Überwachungsbereich innerhalb des Arbeitsraums erfasst, wobei der Arbeitsraumdetektor ausgestaltet ist mit einem bildgebenden Sensor zur Aufnahme von digitalen Bilddateien oder von Punktewolken und mit einer Auswerteeinheit, welche ausgestaltet ist die Bilddateien oder die Punktewolken auszuwerten und eine Positionsangabe einer in dem Überwachungsbereich erkannten Person auszugeben.

Ein Einsatz von einem Industrieroboter in einem Arbeitsraum ohne eine trennende Schutzeinrichtung in der Nähe des Menschen, erfordert eine geeignete sensorische Umgebungserfassung, um Personen sowie andere Objekte sicher detektieren und damit in einem drohenden Kollisionsfall angepasst reagieren zu können, wobei z.B. der Industrieroboter abgeschaltet wird. Eine Steuerung des Industrieroboters erfolgt in der Regel über fehlersichere Automatisierungssysteme.

Im Sinne der Erfindung wird unter fehlersichere Automatisierungssysteme ein Industriecontroller verstanden, welcher nach der Norm IEC62061 zertifiziert ist und damit als eine auf funktionale Sicherheit ausgelegte Steuerung ausgestaltet ist.

Fehlersichere Automatisierungssysteme steuern Prozesse, die als Ergebnis von unerwartetem Betriebsverhalten oder eines Ausfalls sofort einen sicheren Zustand einnehmen können. Dies sind fehlersichere Steuerungsprozesse, bei denen ein sofortiges Herunterfahren in einen sicheren Zustand keine Gefahr für Menschen oder die Umwelt darstellt. Fehlersichere Systeme gehen über das herkömmliche Sicherheits-Engineering hinaus und aktivieren weitreichende intelligente Systeme, die bis zu den elektrischen Antrieben und Messsystemen reichen. Der Anwender setzt fehlersichere Systeme in Anwendungen mit erhöhten Sicherheitsanforderungen ein. Dank der verbesserten Fehlererkennung und -lokalisierung in fehlersicheren Systemen mittels detaillierter Diagnoseinformationen kann die Produktion nach einer sicherheitsbezogenen Unterbrechung schnell wieder aufgenommen werden.

Die nach dem Stand der Technik bekannten Personendetektoren erreichen heute bereits eine sehr hohe Qualität. Um die Qualität bzw. die Zuverlässigkeit eines einzelnen Kanals zu ermitteln, werden vor Inbetriebnahme automatisierte Tests durchgeführt, die ein wichtiger Bestandteil der Sicherheitsargumentation sind. Dazu wird dem Personendetektoren eine große Menge von Bildern vorgelegt, auf denen sich Menschen, Maschine und andere Objekte befinden. Bei dieser Menge von Bildern ist die tatsächliche Anzahl, Position und Größe der Personen jeweils bekannt, so dass automatisch überprüft werden kann, ob der Personendetektor alle Personen erkannt hat, keine Person zu viel erkannt hat, bzw. wie genau die erkannten Positionen sind.

Eine bekannte Klasse von Personendetektoren, und insbesondere die die auf KNN (künstliche neuronale Netzwerke) basierenden Personendetektoren, annotieren jede erkannte Person mit einem reellen Konfidenzwert im Intervall 0,0 bis 1,0. Ein Wert nahe 0 bedeutet, dass der Personendetektor sich nicht sicher ist, tatsächlich eine Person erkannt zu haben. Ein Wert nahe 1 bedeutet, dass der Personendetektor sich sehr sicher ist, an dieser Position auch tatsächlich eine Person erkannt zu haben.

Durch eine Verwendung eines Konfidenzschwellwerts (z.B. 0,7) werden nur noch die Ergebnisse gemeldet, deren Konfidenz über dem Schwellwert liegt. Dadurch verringert sich die Anzahl der falsch positiven Ergebnisse (Person gemeldet, die überhaupt nicht vorhanden ist). Allerdings darf der Schwellwert nicht zu hoch eingestellt werden, da sonst tatsächlich erkannte Personen übersehen werden könnten.

Im Folgenden wird davon ausgegangen, dass der Schwellwert experimentell anhand von Testdaten ermittelt wird, und zwar so, dass alle tatsächlich in den Testdaten vorhandenen Personen um einen Sicherheitswert s höhere Konfidenz aufweisen als der Schwellwert.

Beispiel: im Test werden 1000 Personen mit unterschiedlichen Konfidenzwerten korrekt erkannt. Das Minimum dieser Konfidenzwerte ist 0,8. Dann könnte man den Schwellwert z.B. auf 0,7 einstellen, und ein Sicherheitswert S wäre 0,8-0,7 = 0,1. Das Problem an dem eben beschriebenen Verfahren ist, dass diese Aussage streng genommen nur für die Menge der Testdaten gilt. Die Ergebnisse lassen sich nur dann auf den Einsatz in der Praxis übertragen, wenn die Testdaten den realen Daten entsprechen, oder zumindest sehr ähnlich zu diesen sind. Eine wichtige Voraussetzung für einen aussagekräftigen Test ist daher die sorgfältige Auswahl an Testdaten. Diese müssen möglichst alle Fälle abdecken, die in der Praxis von Relevanz sind.

Insbesondere im Bereich der Personenerkennung ist dies mit Schwierigkeiten verbunden, da:
- Letztlich alle Personen von Natur aus unterschiedliche äußere Merkmale aufweisen (Haar- und Hautfarbe, Größe, Statur, Haltung, ...).
- Die äußeren Merkmale zusätzlich durch Kleidung, Frisur, Schutzausrüstung etc. stark beeinflusst werden. Diese Merkmale unterliegen der Mode oder anderen Einflüssen (z.B. Gesichtsmasken während einer Pandemie).

Alle heute bekannten Testverfahren haben deshalb den Makel, dass sie niemals vollständig sein können. Außerdem können sich die Annahmen, die im Test getroffen wurden, nachträglich ändern, so dass die Aussagekraft des Tests verringert wird.

Es ist demnach die Aufgabe der Erfindung mit einem System zur optischen Überwachung eines Arbeitsraums den aufgezeigten Nachteil zu überwinden.

Die Aufgabe wird für das eingangs genannte System dadurch gelöst, dass dem Arbeitsraum Zugangsbereich vorgelagert ist, welcher ausgestaltet ist, dass dieser zunächst durchschritten werden muss um zu dem Zugang zu gelangen, wobei der Zugangsbereich einen Zugangsbereichsdetektor aufweist, welcher in der funktionsweise dem Arbeitsraumdetektor ähnlich ist und ebenfalls ausgestaltet ist
- mit einem bildgebenden Sensor zur Aufnahme von digitalen Bilddateien oder von Punktewolken und
- mit einer Test-Auswerteeinheit, welche ausgestaltet ist, die Bilddateien oder die Punktewolken so auszuwerten, wie es in der Auswerteeinheit des Arbeitsraumdetektors vorgesehen ist, und eine Positionsangabe einer im Zugangsbereich erkannten Person auszugeben,

weiterhin ist eine Meldeeinheit vorhanden, welche die Positionsangabe der im Zugangsbereich erkannten Person an eine Sicherheitssteuerung weiterleitet,
die Sicherheitssteuerung ist ausgestaltet die gemeldete Positionsangabe im Zugangsbereich als Nachweis für ein sicheres späteres Erkennen der Person im Arbeitsraum zu werten und ist weiterhin ausgestaltet ein Freigabe-Signal für den Zugang zu dem Arbeitsraum zu generieren.

Erfindungsgemäß wird demnach ein Online-Test in einer Personenschleuse vorgeschlagen. Jede Person, die den Arbeitsraum betreten möchte, muss diese Schleuse passieren. In der Schleuse bzw. in dem Zugangsbereich befinden sich eine oder mehrere zusätzliche Instanzen von AI-basierten Personendetektoren. Die Tür, die die Schleuse mit dem zu überwachenden Arbeitsraum verbindet wird von einer Sicherheitssteuerung, insbesondere von einer auf funktionale Sicherheit ausgelegte Sicherheitssteuerung, gesteuert.

Die Funktionsweise dieser Schleuse ist wie folgt: Betritt eine Person die Schleuse, wird dies durch den AI-basierte Personendetektor erkannt. Dieser meldet die Position an die Sicherheitssteuerung. Dadurch wurde nachgewiesen, dass der AI-basierte Personendetektor in der Lage ist, diese bestimmte Person zu erkennen. In diesem Fall gibt die Sicherheitssteuerung die Tür frei. Ist der AI-basierte Personendetektor nicht in der Lage, die Person zu erkennen, öffnet sich die Tür nicht. Die Person kann daran erkennen, dass der Personendetektor nicht in der Lage ist, sie zu erkennen.

Im Unterschied zu den bisherigen Lösungen findet ein Test des Personendetektors mit jeder Person statt, die vom Personendetektor lokalisiert werden soll. Mit Vorteil findet der Test in einer ungefährlichen Umgebung statt. Die im Sicherheitsumfeld für Personendetektor geforderte "Vollständige Prüfung der Sicherheitsfunktion" erfolgt also von Person zu Person. Im Vergleich zu einem einmalig durchgeführten Test wie er bei der Inbetriebnahme durchgeführt wurde kann es nicht zur Situation kommen, dass bestimmte Merkmale einer Person im Test nicht berücksichtigt wurden.

Zur weiteren Verbesserung ist in dem Zugangsbereich zusätzlich ein Sensor zur Positionserkennung einer Person vorhanden und ausgestaltet eine zusätzliche Positionsangabe einer im Zugangsbereich erkannten Person auszugeben und an die Sicherheitssteuerung zu melden, die Sicherheitssteuerung ist weiterhin ausgestaltet, die gemeldete zusätzliche Positionsangabe mit der Positionsangabe des Zugangsbereichsdetektor zu vergleichen und das Freigabe-Signal nur zu generieren, wenn eine Abweichung zwischen den beiden Positionsangaben ein vorgebbares Maß nicht überschreitet.

Durch den zusätzlichen Sensor wird die Sicherheitssteuerung in die Lage versetzt, die Genauigkeit der Positionsbestimmung des Zugangsbereichsdetektors zu prüfen, und die Tür nur dann zu öffnen, wenn die Positionsbestimmung gut genug ist. Eine Möglichkeit zur Realisierung dieser Ausprägung ist die Verwendung mehrerer, vertikal und parallel zueinander angeordneter Lichtgitter. Eine Alternative wäre die Verwendung von Laserscannern oder Trittmatten als klassischer Sensor.

Eine Erkennungssicherheit kann weiter erhöht werden, wenn in dem Zugangsbereich eine gekennzeichnete Stelle an einer Zwangsposition angeordnet ist, dabei ist die Sicherheitssteuerung weiterhin ausgestaltet zu prüfen, ob die Positionsangabe des Zugangsbereichsdetektor während einer vorgebbaren Warte-Zeit mit der Zwangsposition übereinstimmt und nur dann das Freigabe-Signal zu generieren.

Zum Beispiel muss die Person an der gekennzeichneten Stelle. 5s warten. Die Tür öffnet sich nur dann, wenn der Zugangsbereichsdetektor eine Person an genau dieser Position für mindestens 5s meldet.

Auch ist es möglich in dem Zugangsbereich zusätzlich zu oder anstelle der gekennzeichneten Stelle eine am Boden eingezeichnete Spur vorzusehen, dabei ist die Sicherheitssteuerung weiterhin ausgestaltet zu prüfen, ob die kontinuierlich aufgenommenen Positionsangaben des Zugangsbereichsdetektors von der Person mit den Positionsangaben der Spur übereinstimmen und nur dann das Freigabe-Signal zu generieren.

Diese Alternative sieht die Verwendung einer auf dem Boden eingezeichneten Spur vor, der die Person folgen muss. Nur wenn die Person dieser Spur genau folgt, öffnet sich die Tür.

Die Sicherheit kann weiter erhöht werden, wenn in der Sicherheitsteuerung ein erstes Maß und ein zweites Maß abgespeichert ist und das erste Maß eine zulässige Abweichung der Positionsangaben in dem Zugangsbereich beschreibt und das zweite Maß eine zulässige Abweichung der Positionsangaben in dem Arbeitsraum beschreibt dabei ist das erste Maß größer gewählt als das zweite Maß wodurch gewährleistet ist, das nur solche Personen den Arbeitsraum betreten dürfen, bei denen durch die genauere Prüfung im Zugangsbereich auch eine ausreichend genaue Erkennung der Position im Arbeitsraum gegeben ist.

Nun ist sichergestellt, dass nur solche Personen den Arbeitsraum betreten, deren Position der Zugangsbereichsdetektor "genau" erfassen kann.

Sowohl die Auswerteeinheit zur Personenerkennung als auch die Test-Auswerteeinheit ist jeweils mit einem künstlichen neuronalen Netzwerk ausgestaltet.

In der Test-Auswerteeinheit ist eine Instanz des für die Auswerteeinheit in dem Arbeitsraumdetektor trainierten und angelernten künstlichen neuronalen Netzwerk (KNN) eingesetzt.

Die Zeichnung zeigt ein Ausführungsbeispiel der Erfindung, dabei zeigt:
- FIG 1: ein System zur Überwachung eines Arbeitsraumes nach dem Stand der Technik,
- FIG 2: ein System zur Überwachung eines Arbeitsraums mit dem erfindungsgemäß vorgelagerten Zugangsbereich,
- FIG 3: das aus FIG 2 bekannte Überwachungssystem mit einem zusätzlichen Sensor im Zugangsbereich,
- FIG 4: eine Ausgestaltung mit einer gekennzeichneten Stelle bzw. einer Spur im Zugangsbereich,
- FIG 5: einen Zugangsbereichdetektor und einen Arbeitsraumdetektor und die
- FIG 6: eine Sicherheitssteuerung.

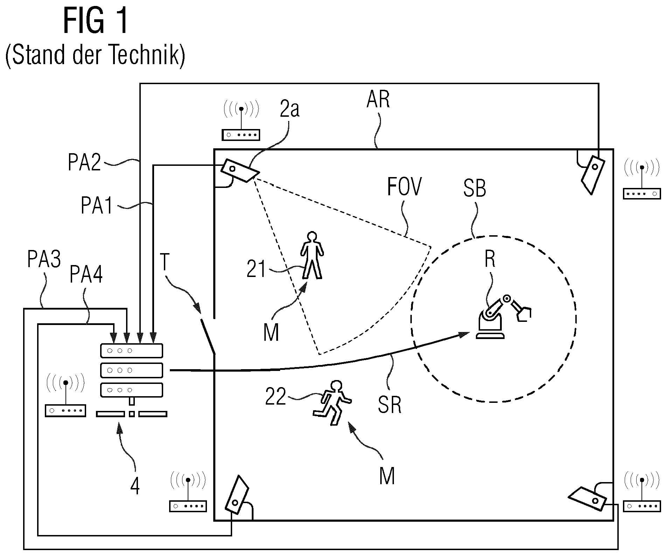

Gemäß Figur 1 ist ein System 1 zur optischen Überwachung eines Arbeitsraums AR abgebildet, welcher über einen Zugang T von zumindest einer Person M begehbar ist.

Der Arbeitsraum AR ist mit Arbeitsraumdetektoren 2a ausgestaltet. Die Arbeitsraumdetektoren 2a können jeweils eine erste Positionsangabe PA1, eine zweite Positionsangabe PA2, eine dritte Positionsangabe PA 3 und eine vierte Positionsangabe PA4 zu einer Sicherheitssteuerung 4 senden. Die Sicherheitssteuerung 4 wiederum kann eine sichere Reaktion SR zu einem Roboter R aussenden.

Der Roboter R befindet sich in einem Schutzbereich SB, wird dieser Schutzbereich SB von einer Person M überschritten so besteht durch die Roboterbewegung eine Gefahr für die Person M.

Der Arbeitsraumdetektor 2a erfasst einen Überwachungsbereich FOV. In dem Arbeitsraum AR steht eine erste Person 21 und eine zweite Person 22. Der Arbeitsraum AR kann über eine Tür, nämlich dem Zugang T, betreten werden.

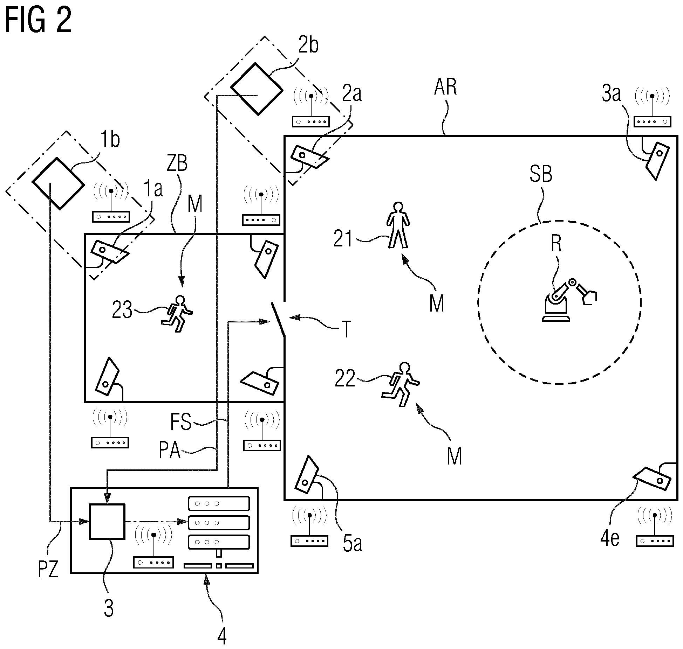

Die FIG 2 zeigt für den Arbeitsraum AR die erfindungsgemäße Erweiterung. Dem Arbeitsraum AR ist ein Zugangsbereich ZB vorgelagert, welcher ausgestaltet ist, dass dieser zunächst durchschritten werden muss um zu dem Zugang T zu gelangen, wobei der Zugangsbereich ZB einen Zugangsbereichdetektor 1a aufweist, welcher in der Funktionsweise dem Aufbau des Arbeitsraumdetektors 2a ähnlich ist.

Der Arbeitsraumdetektor 2a ist ausgestaltet mit einem bildgebenden Sensor zur Aufnahme von digitalen Bilddateien oder von Punktewolken und mit einer Auswerteeinheit 2b, welche ausgestaltet ist, Bilddateien oder die Punktewolken auszuwerten und eine Positionsangabe PA einer in dem Überwachungsbereich FOV erkannten Person M auszugeben.

Der Zugangsbereich ZB mit seinem Zugangsbereichsdetektor 1a kann nun auch im Zugangsbereich ZB durch die ähnliche Ausgestaltung des Zugangsbereichsdetektors 1a eine Positionsangabe PZ einer im Zugangsbereich ZB erkannten Person M ausgeben.

Der Zugangsbereich ZB wird von einer dritten Person 23 durchschritten, wobei der Zugangsbereichsdetektor 1a die Positionsangabe PZ an eine Meldeeinheit 3 sendet. Die Meldeeinheit 3 ist ausgestaltet, die Positionsangabe PZ der im Zugangsbereich ZB erkannten Person M an die Sicherheitssteuerung 4 weiterzuleiten. Die Sicherheitssteuerung 4 ist ausgestaltet die gemeldete Positionsangabe PZ im Zugangsbereich ZB als Nachweis für ein sicheres späteres Erkennen der Person M im Arbeitsraum AR zu werten und ist weiterhin ausgestaltet ein Freigabe-Signal FS für den Zugang T zu dem Arbeitsraum AR zu generieren.

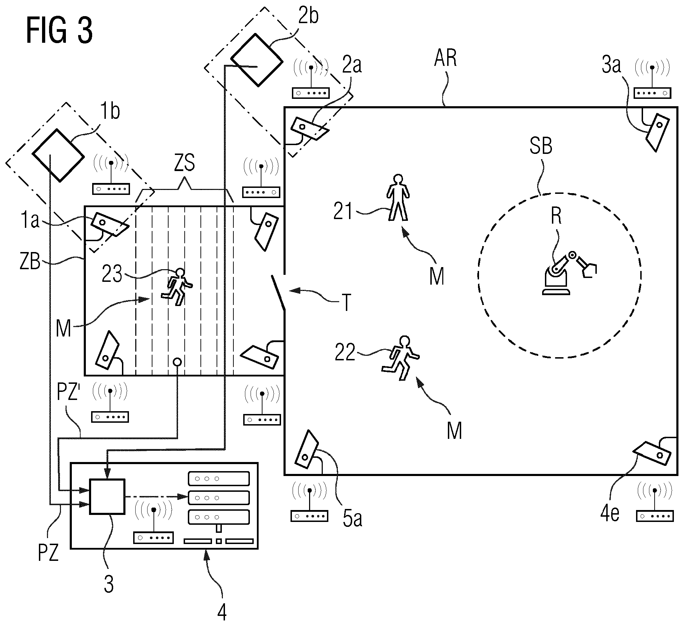

Die FIG 3 zeigt eine in die FIG 2 eingebrachte Ergänzung im Zugangsbereich ZB. In dem Zugangsbereich ZB ist zusätzlich ein Sensor ZS zur Positionserkennung einer Person M vorhanden. Der zusätzliche Sensor ZS ist ausgestaltet eine zusätzliche Positionsangabe PZ`, einer im Zugangsbereich ZB erkannten Person M auszugeben und an die Sicherheitssteuerung 4 zu melden. Die Sicherheitssteuerung 4 ist weiterhin ausgestaltet, die gemeldete Positionsangabe PZ` mit der Positionsangabe PZ des Zugangsbereichsdetektors 1a zu vergleichen und das Freigabe-Signal FS nur zu generieren, wenn eine Abweichung zwischen den beiden Positionsangaben PZ,PZ` ein vorgebbares Maß d nicht überschreitet.

Durch diese Ausgestaltung der Sicherheitssteuerung 4 wird die Sicherheitssteuerung 4 in die Lage versetzt, die Genauigkeit der Positionsbestimmung eines, insbesondere auf einer künstlichen Intelligenz bzw. auf künstlichen neuronalen Netzwerken basierenden, Personendetektors zu prüfen und die Tür bzw. den Zugang T nur dann zu öffnen, wenn diese gut genug ist. Der zusätzliche Sensor ZS ist als ein Lichtgitter mit parallel zueinander angeordneten Lichtstrahlen ausgestaltet.

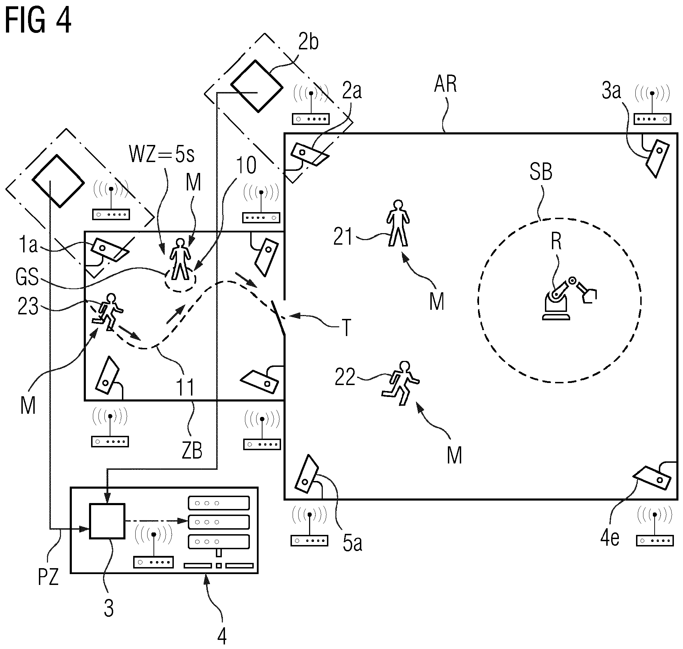

Die Figur 4 sieht in dem Zugangsbereich ZB zusätzlich eine gekennzeichnete Stelle GS an einer Zwangsposition 10 vor. Die Sicherheitssteuerung 4 ist weiterhin ausgestaltet zu prüfen, ob die Positionsangabe PZ des Zugangsbereichsdetektors 1a während einer vorgegebenen Wartezeit WZ mit der Zwangsposition 10 übereinstimmt und nur dann das Freigabe-Signal FS zu generieren. Die Person M muss an der gekennzeichneten Stelle GS beispielsweise 5 Sekunden warten. Die Tür öffnet sich nur dann, wenn der Zugangsbereichsdetektor 1a eine Person M an genau dieser Position nämlich der Zwangsposition 10 für mindestens 5 Sekunden gemeldet hat.

Auch zeigt die FIG 4, dass es möglich ist in den Zugangsbereich ZB zusätzlich zu oder anstelle der gekennzeichneten Stelle GS eine am Boden eingezeichnete Spur 11 vorzusehen. Die Sicherheitssteuerung 4 ist dabei ausgestaltet zu prüfen, ob die kontinuierlich aufgenommenen Positionsangabe PZ des Zugangsbereichsdetektors 1a von der Person M mit den Positionsangaben der Spur 11 übereinstimmen und nur dann das Freigabe-Signal FS zu generieren. Das bedeutet die auf dem Boden eingezeichnete Spur 11 muss von der Person M genau nachgegangen werden, sonst wird die Tür nicht geöffnet.

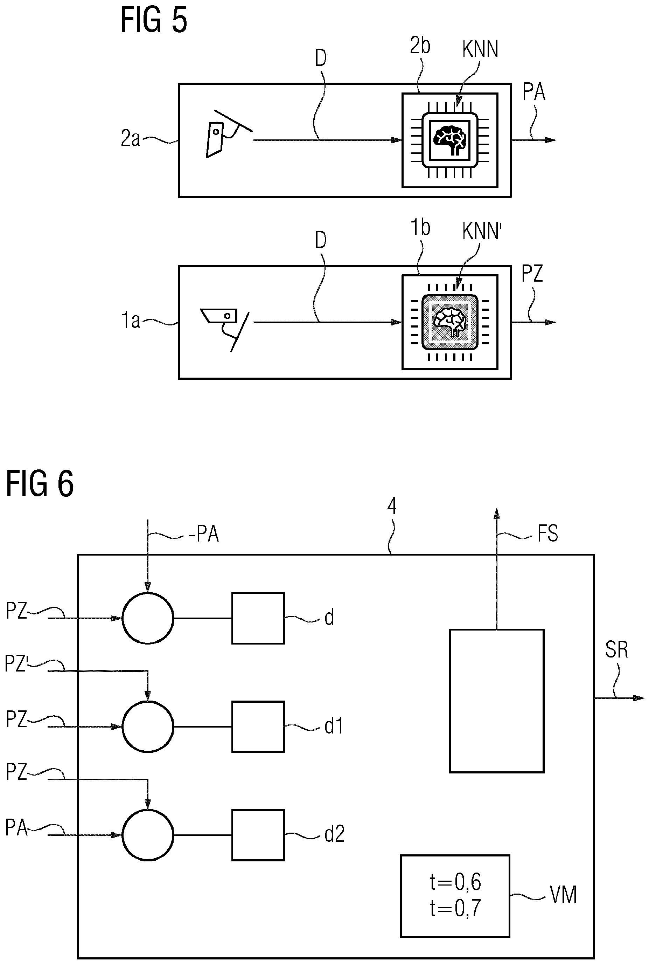

Die FIG 5 zeigt den Zugangsbereichsdetektor 1a und den Arbeitsraumdetektor 2a. Der Arbeitsraumdetektor 2a ist mit einem künstlichen neuronalen Netzwerk KNN ausgestaltet. Ein bildgebender Sensor zur Aufnahme von digitalen Bilddateien oder von Punktewolken sendet die Bilddaten D an das künstliche neuronale Netzwerk KNN, welche daraus eine Positionsangabe PA generiert. Der Zugangsbereichsdetektor 1a weist als Test-Auswerteeinheit 1b eine Instanz KNN' des für die Auswerteeinheit 2b in dem Arbeitsraumdetektor 2a trainierten und angelernten künstlichen neuronalen Netzwerk KNN auf.

Die FIG 6 zeig die Sicherheitsteuerung 4, ein erstes Maß d1 und ein zweites Maß d2 sind abgespeichert. Das erste Maß d1 ist eine zulässige Abweichung der Positionsangaben PZ,PZ` in dem Zugangsbereich ZB und das zweite Maß d2 ist eine zulässige Abweichung der Positionsangaben PZ,PZ` in dem Arbeitsraum AR. Dabei ist das erste Maß d1 größer gewählt als das zweite Maß d2, wodurch gewährleistet ist, dass nur solche Personen M den Arbeitsraum AR betreten dürfen, bei denen durch die genauere Prüfung im Zugangsbereich ZB auch eine ausreichend genaue Erkennung der Position im Arbeitsraum AR gegeben ist.

## Patentansprüche

1. System (1) zur optischen Überwachung eines Arbeitsraums (AR), welcher über einen Zugang (T) von zumindest einer Person (M) begehbar ist, umfassend
einen Arbeitsraumdetektor (2a) für den Arbeitsraum (AR), welcher einen Überwachungsbereich (FOV) innerhalb des Arbeitsraums (AR) erfasst, wobei
der Arbeitsraumdetektor (2a) ausgestaltet ist
- mit einem bildgebenden Sensor zur Aufnahme von digitalen Bilddateien oder von Punktewolken und
- mit einer Auswerteeinheit (2b), welche ausgestaltet ist die Bilddateien oder die Punktewolken auszuwerten und eine Positionsangabe (PA) einer in dem Überwachungsbereich (FOV) erkannten Person (M) auszugeben,
**gekennzeichnet durch**
einen dem Arbeitsraum (AR) vorgelagerten Zugangsbereich (ZB), welcher ausgestaltet ist, dass dieser zunächst durchschritten werden muss um zu dem Zugang (T) zu gelangen, wobei der Zugangsbereich (ZB) einen Zugangsbereichsdetektor (1a) aufweist, welcher in der funktionsweise dem Arbeitsraumdetektor (2a) ähnlich ist und ebenfalls ausgestaltet ist
- mit einem bildgebenden Sensor zur Aufnahme von digitalen Bilddateien oder von Punktewolken und
- mit einer Test-Auswerteeinheit (1b), welche ausgestaltet ist die Bilddateien oder die Punktewolken so auszuwerten wie es in der Auswerteeinheit (2b) des Arbeitsraumdetektors (2a) vorgesehen ist, und eine Positionsangabe (PZ) einer im Zugangsbereich (ZB) erkannten Person (M) auszugeben,
weiterhin ist eine Meldeeinheit (3) vorhanden, welche die Positionsangabe (PZ) der im Zugangsbereich (ZB) erkannten Person (M) an eine Sicherheitssteuerung (4) weiterleitet, die Sicherheitssteuerung (4) ist ausgestaltet die gemeldete Positionsangabe (PZ) im Zugangsbereich (ZB) als Nachweis für ein sicheres späteres Erkennen der Person (M) im Arbeitsraum (AR) zu werten und ist weiterhin ausgestaltet ein Freigabe-Signal (FS) für den Zugang (T) zu dem Arbeitsraum (AR) zu generieren.

2. System (1) nach Anspruch 1, wobei in dem Zugangsbereich (ZB) zusätzlich ein Sensor (ZS) zur Positionserkennung einer Person (M) vorhanden ist und ausgestaltet ist eine zusätzliche Positionsangabe (PZ`) einer im Zugangsbereich (ZB) erkannten Person (M) auszugeben und an die Sicherheitssteuerung zu melden, die Sicherheitssteuerung () ist weiterhin ausgestaltet die gemeldete zusätzliche Positionsangabe (PZ`) mit der Positionsangabe (PZ) des Zugangsbereichsdetektor (1a) zu vergleichen und das Freigabe-Signal (FS) nur zu generieren, wenn eine Abweichung zwischen den beiden Positionsangaben (PZ,PZ`) ein vorgebbares Maß (d) nicht überschreitet.

3. System (1) nach Anspruch 1 oder 2, wobei in dem Zugangsbereich (ZB) eine gekennzeichnete Stelle (GS) an einer Zwangsposition (10) angeordnet ist, dabei die Sicherheitssteuerung (4) weiterhin ausgestaltet zu prüfen, ob die Positionsangabe (PZ) des Zugangsbereichsdetektor (1a) während einer vorgebbaren Warte-Zeit (WZ) mit der Zwangsposition (10) übereinstimmt und nur dann das Freigabe-Signal (FS) zu generieren.

4. System (1) nach Anspruch 3, wobei in dem Zugangsbereich (ZB) zusätzlich zu oder anstelle der gekennzeichneten Stelle (GS) eine am Boden eingezeichnete Spur (11) vorhanden ist, dabei ist die Sicherheitssteuerung (4) weiterhin ausgestaltet zu prüfen, ob die kontinuierlich aufgenommenen Positionsangaben (PZ) des Zugangsbereichsdetektors (1a) von der Person (M) mit den Positionsangaben der Spur (11) übereinstimmen und nur dann das Freigabe-Signal (FS) zu generieren.

5. System (1) nach einem der Ansprüche 2 bis 4, wobei in der Sicherheitsteuerung (4) ein erstes Maß (d1) und ein zweites Maß (d2) abgespeichert ist und das erste Maß (d1) eine zulässige Abweichung der Positionsangaben (PZ,PZ`) in dem Zugangsbereich (ZB) beschreibt und zweite Maß (d2) eine zulässige Abweichung der Positionsangaben (PZ,PZ`) in dem Arbeitsraum (AR) beschreibt, dabei ist das erste Maß (d1) größer gewählt als das zweite Maß (d2) wodurch gewährleistet ist, das nur solche Personen (M) den Arbeitsraum (AR) betreten dürfen, bei denen durch die genauere Prüfung im Zugangsbereich (ZB) auch eine ausreichend genaue Erkennung der Position im Arbeitsraum (AR) gegeben ist.

6. System (1) nach einem der Ansprüche 1 bis 5, wobei sowohl die Auswerteeinheit (2b) zur Personenerkennung als auch die Test-Auswerteeinheit (1b) jeweils mit einem künstlichen neuronalen Netzwerk (KNN) ausgestaltet sind.

7. System (1) nach Anspruch 6, wobei in der Test-Auswerteeinheit (1b) eine Instanz (KNN`) des für die Auswerteeinheit (2b) in dem Arbeitsraumdetektor (2a) trainierten und angelernten künstlichen neuronalen Netzwerk (KNN) eingesetzt ist.
